Europäisches Patentamt

European Patent Office

Office européen des brevets

(11) Veröffentlichungsnummer: **0 273 332**
**A2**

(12) **EUROPÄISCHE PATENTANMELDUNG**

(21) Anmeldenummer: 87118902.3

(22) Anmeldetag: 19.12.87

(51) Int. Cl.⁴: **C22C 21/00** , C22C 9/00 ,
F16C 33/12

(30) Priorität: 23.12.86 DE 3644129

(43) Veröffentlichungstag der Anmeldung:
06.07.88 Patentblatt 88/27

(84) Benannte Vertragsstaaten:
DE ES FR GB IT

(71) Anmelder: KOLBENSCHMIDT
Aktiengesellschaft
Karl-Schmidt-Strasse 8/12 Postfach 1351
D-7107 Neckarsulm(DE)

(72) Erfinder: Matucha, Karl Heinz, Dr.
Atriumweg 2
D-6233 Kelkheim(DE)
Erfinder: Wincierz, Peter, Prof. Dr.
Hohenwaldstrasse 29
D-6374 Steinbach(DE)
Erfinder: Pfestorf, Harald
Panoramastrasse 18/1
D-7101 Untereisesheim(DE)

(74) Vertreter: Rieger, Harald, Dr.
Reuterweg 14
D-6000 Frankfurt a.M.(DE)

(54) Metallische Gleitlagerwerkstoffe.

(57) Bei metallischen Gleitlagerwerkstoffen sind in einer gehärteten Matrix harte und weiche Phasen feinverteilt und heterogen eingelagert. Um die Gleitlagerwerkstoffe im Mischreibungsgebiet höher belastbar auszubilden, beträgt bei einem Überwiegen der harten Phasen das Volumenverhältnis von harten zu weichen Phasen 1,5 bis 2,5 und bei einem Überwiegen der weichen Phasen das Volumenverhältnis von harten zu weichen Phasen 0,18 bis 0,70.

# Metallische Gleitlagerwerkstoffe

Die Erfindung betrifft metallische Gleitlagerwerkstoffe, insbesondere auf Aluminium-, Kupfer- und Eisenbasis, bei denen in einer durch Mischkristallhärtung, Ausscheidungshärtung und/oder Kaltverfestigung gehärteten Matrix harte und weiche Phasen feinverteilt und heterogen eingelagert sind.

Da solche metallischen Gleitlagerwerkstoffe für Gleitlagerungen aller Art unter gleichzeitiger Kraftübertragung Anwendung finden, sind die an sie gestellten Anforderungen außerordentlich vielfältig. Die Anforderungen sind für metallische Gleitlagerwerkstoffe in DIN 50 282 zusammengestellt, danach werden neben einem hohen Verschleißwiderstand eine hohe mechanische Belastungsgrenze, gute Anpassungsfähigkeit, ein gutes Einlauf-und Notverhalten, eine gute Korrosionsbeständigkeit, eine gute Schmierstoffbenetzbarkeit und ein guter Riefenbildungswiderstand verlangt. Da es sich bei diesen Anforderungen nicht um Eigenschaften der Werkstoffe selbst handelt, sondern da zu ihrer Erfüllung immer das ganze tribologische System, d.h. der spezielle Anwendungsfall mit seinen Randbedingungen bekannt sein muß, können die geforderten Systemeigenschaften nicht durch Zahlen konkretisiert, sondern nur durch Begriffe wie sehr gut, gut, schlecht usw. charakterisiert werden.

Als metallische Gleitlagerwerkstoffe haben sich vor allen Dingen im Brennkraftmaschinenbau seit vielen Jahren Legierungen auf Aluminium-und Kupferbasis bewährt, bei denen in einer durch Mischkristallhärtung, Ausscheidungshärtung und/oder Kaltverfestigung gehärteten Matrix harte und weiche Phasen feinverteilt und heterogen eingelagert sind. Bei Gleitlagerwerkstoffen auf Aluminiumbasis ist die Matrix durch den Zusatz von Kupfer und/oder Zink gehärtet. Durch gezielte Zusätze von Blei, Zinn und/oder Silizium liegen in der gehärteten Matrix harte Phasen aus Siliziden, Aluminiden, und weiche Phasen aus Blei und Zinn vor. Bei der Gruppe der Gleitlagerwerkstoffe auf Kupferbasis mit einem Zusatz von Zinn und/oder Zink führt das im Kupfer gelöste Zinn bzw. Zink zur mischkristall-und/oder ausscheidungsgehärteten Matrix, in der durch gezielte Zusätze von Mangan, Eisen, Silizium, Aluminium und Blei als harte Phasen Mangan-Silizide, Eisen-Mangan-Silizide sowie Aluminide und als weiche Phase Blei eingelagert sind.

Die Mischkristall-und Ausscheidungshärtung sowie die Kaltverfestigung erhöhen die mechanische Belastungsgrenze, während die Anpassungsfähigkeit im wesentlichen von den durch die Matrix der Gleitlagerwerkstoffe vorgegebenen elastischen Eigenschaften sowie von deren Duktilität abhängt. Durch die harten und weichen Phasen werden vor allem die Eigenschaften Einbettungsfähigkeit, Einlauf-und Notverhalten sowie der Verschleißwiderstand beeinflußt. Weiche Phasen verbessern die Einbettfähigkeit sowie das Einlauf-und Notverhalten, während harte Phasen den Verschleißwiderstand erhöhen. Dabei werden allerdings mit zunehmendem Anteil harter Phasen die Einbettfähigkeit und das Notlaufverhalten verschlechtert. Die harten und weichen Phasen erhöhen die Verträglichkeit mit dem Gegenwerkstoff; der günstige Einfluß der harten und/oder weichen Phasen auf die vorstehend aufgeführten Eigenschaften begrenzt andererseits die mechanische Belastbarkeit der metallischen Gleitlagerwerkstoffe.

Für die hohen Anforderungen an Gleitlagerungen im modernen Brennkraftmaschinenbau als Folge der Steigerung der Zünddrücke und damit höherer spezifischer Gleitlagerbelastungen bei erhöhten Betriebstemperaturen muß eine ausreichend gute Belastbarkeit und mechanische Belastungsgrenze der Gleitlagerwerkstoffe gewährleistet sein. Einerseits darf die mechanische Belastungsgrenze, d.h. die Festigkeit und andererseits ein bestimmter Verschleißbetrag, insbesondere weil sich bei höheren Belastungen kleinere Schmierfilmdicken ergeben und damit hochbelastete Gleitlagerungen länger im Mischreibungsgebiet laufen, nicht überschritten werden.

Es ist daher die Aufgabe der vorliegenden Erfindung, einen diesen Anforderungen genügenden Kompromiß zwischen der mechanischen Belastungsgrenze und den übrigen Systemeigenschaften zu erreichen.

Diese Aufgabe ist dadurch gelöst, daß bei einem metallischen Gleitlagerwerkstoff mit dem eingangs beschriebenen Gefügeaufbau bei einem Überwiegen der in der Matrix eingelagerten harten Phasen gegenüber den weichen Phasen das Volumenverhältnis von harten zu weichen Phasen 1,5 bis 2,5 und der Volumenanteil der weichen Phasen > 1,0 bis 4,0 % ist.

Bei einem Überwiegen der in der Matrix eingelagerten weichen Phasen gegenüber den harten Phasen beträgt das Volumenverhältnis von harten zu weichen Phasen 0,18 bis 0,60 und der Volumenanteil der harten Phasen 3,0 bis 8,0 %.

Im Rahmen der vorzugsweisen Ausbildung des Gefüges der metallischen Gleitlagerwerkstoffe verhält sich bei einem Überwiegen der harten Phasen gegenüber den weichen Phasen in der Matrix das Volumen von harten zu weichen Phasen 1,75 bis 2,25 und im Falle des Überwiegens der weichen gegenüber den harten Phasen in der Matrix das Volumen von harten zu weichen Phasen 0,25 bis 0,60.

Überwiegt bei einer gehärteten Aluminiummatrix als harte Phase Silizium, dann ist die weiche Phase aus Blei und/oder Wismut gebildet, während bei einem Überwiegen der weichen Phase Zinn die harte Phase aus Silizium besteht.

Wenn bei einer gehärteten Matrix auf Kupferbasis als harte Phasen Mangan-Silizide oder Eisen-Mangan-Silizide überwiegen, dann ist als weiche Phase Blei eingelagert.

Die metallischen Gleitlagerwerkstoffe lassen sich vorteilhaft auf schmelzmetallurgischem oder pulvermetallurgischem Weg oder mittels Kathodenzerstäubung herstellen und lassen sich für Massiv- und Verbundlager verwenden.

Die Erfindung wird im folgenden näher und beispielhaft erläutert.

Es wurden bei der Aluminium-Zinn-Legierung AlSn30 zusätzliche Siliziumgehalte von 1,0, 2,0, 2,5, 5,0 und 10 % eingestellt, so daß der Mengenanteil der weichen Phase Zinn gegenüber der harten Phase Silizium überwog und der Volumenanteil der harten Phase 0 bis 15 % betrug. Andererseits wurde in Aluminium-Silizium-Legierung AlSi5 zusätzliche Bleigehalte von 10, 15, 20 % und in die Aluminium-Silizium-Legierung AlSi2 ein Bleigehalt von 5 % eingebaut, so daß der Mengenanteil der harten Phase Silizium gegenüber der weichen Phase Blei überwog und der Volumenanteil der weichen Phase 1 bis 5 % betrug. Diese Legierungen wurden mit der Stift-Scheibe-Methode im Mischreibungsgebiet bei einer Belastung von p = 5 N/mm² und einer Gleitgeschwindigkeit von v = 9 mm/s untersucht und der Reibungsbeiwert als Maß für die Gleiteigenschaften und die Laufzeit als Maß für die Notlaufeigenschaften gemessen und eine relative Bewertung der Gleitlagerwerkstoffe der Gütezahlen von 1 bis 10, wobei 10 den höchsten Gütewert darstellt, vorgenommen.

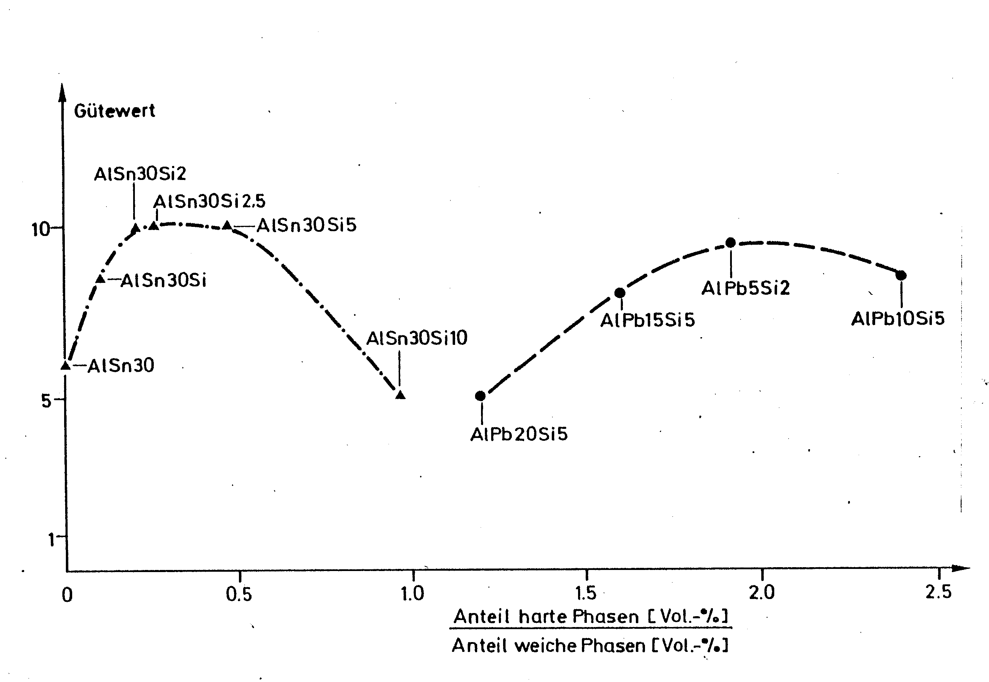

In dem in der Zeichnung wiedergegebenen Diagramm sind die Gütewerte für die Aluminium-Gleitlagerwerkstoffe in Abhängigkeit von dem Verhältnis Volumenanteil harte Phasen zu Volumenanteil weiche Phasen dargestellt. Dabei zeigt sich, daß das Laufverhalten von Aluminium-Gleitlagerwerkstoffen, bei denen die weiche Phase überwiegt und damit das Verhältnis von harter zu weicher Phase ≤ 1 ist, durch harte Phasen deutlich verbessert wird, wenn die erfindungsgemäß vorgesehenen Volumenverhältnisse von harten zu weichen Phasen eingehalten werden. Wird bei einem Überwiegen der weichen Phase der Volumenanteil harter gegenüber den weichen Phasen zu groß, so erfolgt eine deutliche Verschlechterung des Laufverhaltens.

Ist der Volumenanteil harter Phasen größer als der der weichen Phasen und das Verhältnis der Volumenanteile > 1, so wird durch die Zunahme der weichen Phasen das Laufverhalten deutlich verbessert, wenn das Volumenverhältnis von harten zu weichen Phasen zunimmt und die Mengenverhältnisse der harten zu weichen Phasen die erfindungsgemäß vorgesehenen Werte annehmen.

Das bedeutet, daß das Laufverhalten von metallischen Gleitlagerwerkstoffen im Mischreibungsgebiet durch die richtige Einstellung des Verhältnisses der Volumenanteile von harten und weichen Phasen optimal einstellbar ist. Dabei ist diese Einstellung vom Herstellungsweg weitgehend unabhängig. Besonders günstige Kombinationen aller Systemeigenschaften lassen sich erzielen, wenn die Gefügeausbildung fein und gleichmäßig erfolgt.

## Ansprüche

1. Metallische Gleitlagerwerkstoffe, insbesondere auf Aluminium-, Kupfer-und Eisenbasis, bei denen in einer durch Mischkristallhärtung, Ausscheidungshärtung und/oder Kaltverfestigung gehärteten Matrix harte und weiche Phasen feinverteilt und heterogen eingelagert sind, dadurch gekennzeichnet, daß bei einem Überwiegen der harten gegenüber den weichen Phasen das Volumenverhältnis von harten zu weichen Phasen 1,5 bis 2,5 und der Volumenanteil der weichen Phasen > 1,0 bis 4,0 % beträgt.

2. Metallische Gleitlagerwerkstoffe, insbesondere auf Aluminium-, Kupfer-und Eisenbasis, bei denen in einer durch Mischkristallhärtung, Ausscheidungshärtung und/oder Kaltverfestigung gehärteten Matrix harte und weiche Phasen feinverteilt und heterogen eingelagert sind, dadurch gekennzeichnet, daß bei einem Überwiegen der weichen gegenüber den harten Phasen das Volumenverhältnis von harten zu weichen Phasen 0,18 bis 0,70 und der Volumenanteil der harten Phasen 3,0 bis 8,0 % beträgt.

3. Metallische Gleitlagerwerkstoffe nach Anspruch 1, dadurch gekennzeichnet, daß bei einem Überwiegen der harten gegenüber den weichen Phasen das Volumenverhältnis von harten zu weichen Phasen 1,75 bis 2,25 beträgt.

4. Metallische Gleitlagerwerkstoffe nach Anspruch 2, dadurch gekennzeichnet, daß bei einem Überwiegen der weichen gegenüber den harten Phasen das Volumenverhältnis von harten zu weichen Phasen 0,25 bis 0,60 beträgt.

5. Metallische Gleitlagerwerkstoffe nach den Ansprüchen 1 und 3, dadurch gekennzeichnet, daß in die gehärtete Aluminiummatrix als harte Phase Silizium und als weiche Phase Blei oder Wismut eingelagert sind.

6. Metallische Gleitlagerwerkstoffe nach den Ansprüchen 1 und 3, dadurch gekennzeichnet, daß in den Kupfer-Mischkristall als harte Phase Mangan-Silizide oder Eisen-Mangan-Silizide und als weiche Phase Blei eingelagert sind.

7. Metallische Gleitlagerwerkstoffe nach den Ansprüchen 2 und 4, dadurch gekennzeichnet, daß in den Aluminium-Mischkristall als weiche Phase Zinn und als harte Phase Silizium eingelagert sind.

8. Metallische Gleitlagerwerkstoffe nach den Ansprüchen 1 bis 7, gekennzeichnet durch eine schmelzmetallurgische oder pulvermetallurgische Herstellung oder durch eine Herstellung mittels Kathodenzerstäubung.

9. Verwendung der metallischen Gleitlagerwerkstoffe nach den Ansprüchen 1 bis 8 für Massiv-und Verbundlager.

Gütewert

AlSn30Si2

AlSn30Si2.5

10

AlSn30Si5

AlSn30Si

AlSn30Si10

AlSn30

AlPb5Si2

AlPb15Si5

AlPb10Si5

5

AlPb20Si5

1

0        0.5        1.0        1.5        2.0        2.5

$$\frac{\text{Anteil harte Phasen [Vol.-\%]}}{\text{Anteil weiche Phasen [Vol.-\%]}}$$

0 273 332